# EUROPEAN PATENT APPLICATION

(11) **EP 1 986 456 A2**
(43) Date of publication of application: **29.10.2008**
(21) Application number: 07020977.0
(22) Date of filing: 26.10.2007
(51) Int. Cl.: H04Q 7/38

(54) **Providing location- based services in a mobile communication system**

(30) Priority: 26.04.2007 KR 20070041032; 26.04.2007 KR 20070041033
(71) Applicant: Samsung Electronics Co., Ltd., Suwon-si, Gyeonggi-Do (KR)
(72) Inventor: Kim, Jun-Hyung, Suwon-si Gyeonggi-do (KR); Lim, Nae-Hyun, Suwon-si Gyeonggi-do (KR); Park, Jung-Shin, Suwon-si Gyeonggi-do (KR); Lee, Ji-Cheol, Suwon-si Gyeonggi-do (KR)
(74) Representative: Boakes, Jason Carrington

(57) **Abstract**

A system for providing LBS in a mobile communication system. An AAA server manages information on an anchor authenticator(AA) of an ASN GW. Upon receipt of a location information service request message from an LBS client, a location information server receives routing information for routing to an AA of an associated mobile station from the AAA server, and transmits a request for location information of the mobile station to the ASN GW. Upon receipt of the location information request from the location information server, a location information controller performs a location estimation procedure between the mobile station and an interconnected base station when the mobile station is in the idle mode, and upon receipt of location information from the base station, transmits the received location information to the location information server.

## Description

### BACKGROUND OF THE INVENTION

### 1. Field of the Invention

The present invention generally relates to mobile communication systems and, more particularly, to a system and a method for providing Location Based Services (LBS) in a mobile communication system.

### 2. Description of the Related Art

Mobile communication systems are evolving into advanced systems that provide not only existing voice services but also various value-added services differentiated from voice services. In the current mobile communication market, voice service-based service providers have reached a limit in terms of their profits. Therefore, service providers pursue profits by providing various value-added services differentiated from voice services, such as, for example, LBS which is based on location information of a Mobile Station (MS). For example, typical LBS services include a friend-finding service, a location-finding service, a car navigation service, etc.

With the development of mobile communication systems, services provided in mobile communication systems have become diversified, so mobile communication systems need high-speed transmission/reception of high-volume data to increase their performance. In a current mobile communication system, active research is being conducted on various standards to transmit/receive high-volume data at high speed, and the typical standard includes the Worldwide Interoperability for Microwave Access (WiMAX) Forum Network Working Group standard. The WiMAX Forum Network Working Group standard is now undergoing standardization.

Recently, there has been an increasing user demand for the foregoing LBS. However, in the WiMAX Forum Network Working Group standard now under standardization, no detailed LBS provisioning scheme has been proposed. Therefore, there is a need for a scheme for providing the LBS in the mobile communication system employing the WiMAX Forum Network Working Group standard.

### SUMMARY OF THE INVENTION

The present invention addresses at least the above-described problems and/or disadvantages and provides at least the advantages described below. Accordingly, an aspect of the present invention is to provide a system and a method for providing Location Based Services (LBS) in a mobile communication system.

According to an aspect of the present invention, there is provided a system for providing LBS in a mobile communication system. The LBS provisioning system includes an Authentication, Authorization, and Accounting (AAA) server for managing information on an anchor authenticator of an Access Services Network GateWay (ASN GW) in which a mobile station is registered when entering the mobile communication system; a Paging Controller (PC) for performing paging on the mobile station; a location information server for, upon receipt of a location information service request message from an LBS client, receiving routing information for routing to an anchor authenticator of an associated mobile station from the AAA server, and transmitting a request for location information of the mobile station to the ASN GW including information on an anchor authenticator of the mobile station using the routing information; and a location information controller for, upon receipt of the location information request from the location information server, determining whether the mobile station is in an idle mode, and when the mobile station is in the idle mode, instructing the PC to page the mobile station so a location estimation procedure is performed between the mobile station and a base station connected to the mobile station, and upon receipt of location information of the mobile station from the base station, transmitting the received location information to the location information server.

According to another aspect of the present invention, there is provided a system for providing LBS in a mobile communication system. The LBS provisioning system includes an AAA server including information on an anchor authenticator of an ASN GW in which a mobile station is registered when entering the mobile communication system ; a location information server for, upon receipt of a location information service request message from an LBS client, receiving routing information for routing to an anchor authenticator of the mobile station from the AAA server, and transmitting a request for location information of the mobile station to the ASN GW including the anchor authenticator of the mobile station using the routing information; and a location information controller for, upon receipt of the location information request from the location information server, transmitting a request for location information of the mobile station to a base station to which the mobile station belongs, and upon receipt of location information of the mobile station from the base station, transmitting the received location information of the mobile station to the location information server.

According to another aspect of the present invention, there is provided a method for providing LBS in a mobile communication system. The LBS provisioning method includes receiving, by a location information server proving an LBS, a location information service request message from an LBS client, receiving, by the location information server, routing information for routing to an anchor authenticator of an associated mobile station from an Authentication, Authorization, and Accounting (AAA) server, transmitting a request for location information of the mobile station to an Access Services Network GateWay (ASN GW) including information on an anchor authenticator of the mobile station using the routing information, receiving, by a location information controller included in the ASN GW, the location information request from the location information server, and determining whether the mobile station is in an idle mode, controlling, by the location information controller, a Paging Controller (PC) to page the mobile station so a location estimation procedure is performed between the mobile station and a base station connected to the mobile station, when the mobile station is in the idle mode, and receiving, by the location information controller, location information of the mobile station from the base station, and transmitting the received location information to the location information server.

According to another aspect of the present invention, there is provided a method for providing LBS in a mobile communication system. The LBS provisioning method includes receiving, by a location information server proving an LBS, a location information service request message from an LBS client, receiving, by the location information server, routing information for routing to an anchor authenticator of an associated mobile station from an Authentication, Authorization, and Accounting (AAA) server, transmitting a request for location information of the mobile station to an Access Services Network GateWay (ASN GW) including information on an anchor authenticator of the mobile station using the routing information, receiving, by the location information controller included in the ASN GW, the location information request from the location information server, and transmitting a request for location information of the mobile station to a base station to which the mobile station belongs, receiving, by the location information controller, location information of the mobile station from the base station, and transmitting the received location information of the mobile station to the location information server.

### BRIEF DESCRIPTION OF THE DRAWINGS

The above and other aspects, features and advantages of the present invention will become more apparent from the following detailed description when taken in conjunction with the accompanying drawings in which:
FIG. 1 is a block diagram of an LBS provisioning system according to the present invention;
FIG. 2 illustrates a method for providing a location information service for a mobile station in a connected mode in an LBS provisioning system according to the present invention; and
FIG. 3 illustrates a method for providing a location information service for a mobile station in an idle mode in an LBS provisioning system according to the present invention.

### DETAILED DESCRIPTION OF THE PREFERRED EMBODIMENTS

Preferred embodiments of the present invention will now be described with reference to the annexed drawings. In the drawings, the same or similar elements are denoted by the same reference numerals even though they are depicted in different drawings. In the following description, a detailed description of known functions and configurations incorporated herein has been omitted for clarity and conciseness.

The present invention provides a system and a method for providing Location Based Services (LBS) in a mobile communication system. Although the present invention will be described herein with reference to a mobile communication system employing the Worldwide Interoperability for Microwave Access (WiMAX) Forum Network Working Group standard, by way of example, it is not intended to limit the present invention thereto.

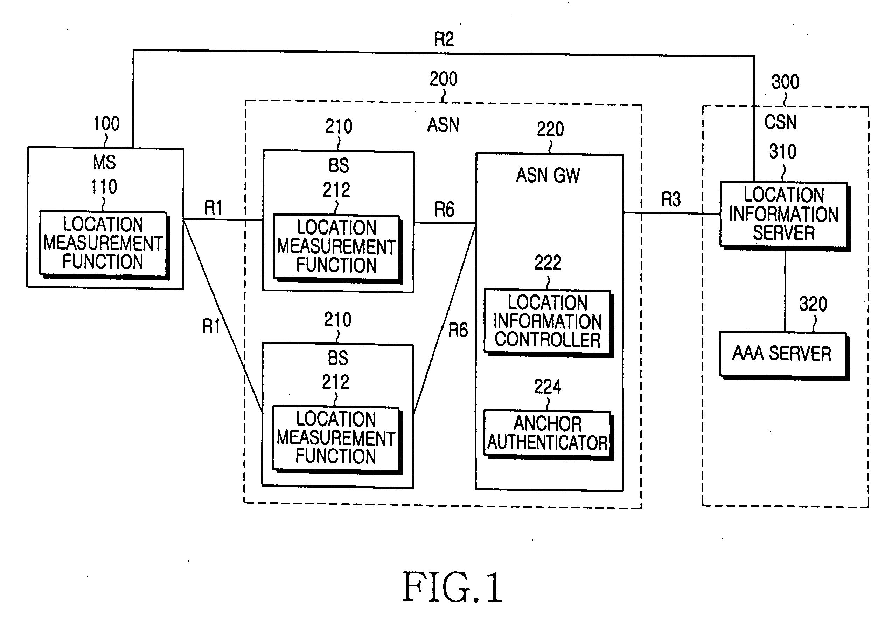

FIG. 1 shows an LBS provisioning system according to the present invention.

Referring to FIG. 1, the LBS provisioning system generally includes a Mobile Station (MS) 100, an Access Services Network (ASN) 200, and a Connectivity Services Network (CSN) 300.

The ASN 200 provides the radio access infrastructure to the network service providers, and includes Base Stations (BSs) 210 and an ASN Gateway (ASN GW) 220. The CSN 300 provides IP connectivity and network services to the subscribers, and includes a location information server 310, also known as Location Server (LS), and an Authorization, Authentication and Accounting (AAA) server 320. The ASN GW 220 includes a location information controller 222, also known as Location Controller (LC), for performing Location Based Services (LBS) according to the present invention, and an anchor authenticator 224 having information on MSs.

The location information server 310 is a service server for managing location information of MSs and handling a request for a location service. The location information server 310, by means of the AAA server 320, performs service authentication on the users or network elements that request a location information service. Further, the location information server 310, by means of the AAA server 320, performs a privacy check operation of determining whether a corresponding MS, location information of which the MS should provide, will not open location information of the MS to the public to protect the MS or will open the location information of the MS only to a particular target (e.g. particular person or network element). In other words, the location information server 310 checks whether the user or network element using the location information has an authority to receive the location information by the MS providing the location information or by other means.

The AAA server 320 has information on an ASN GW that the MSs initially access when entering the LBS provisioning system. That is, the AAA server 320 receives information on the anchor authenticator of the MSs from the ASN GW that the MSs have initially accessed when entering the network. Therefore, the AAA server 320 has path (or routing) information for the anchor authenticator of the MSs. As a result, the location information controller 222 of the ASN GW, in which the MS is registered when initially entering the network, manages location information of the corresponding MS, and the location information controller 222 is disposed in the ASN GW where the anchor authenticator of the MS is disposed.

Specifically, when the MS 100 performs an initial entry, the MS 100 is registered in the anchor authenticator included in the associated ASN GW. The information on the anchor authenticator is stored again in the AAA server 320. Accordingly, when the user or network element receives an authentication request for the Location Based Services from the location information server 310 and provides the results to the location information server 310, the AAA server 320 delivers the authentication to the location information server 310 along with routing information for routing to the anchor authenticator of the corresponding MS.

As a result, when the location information server 310 exchanges authentication information with the AAA server 320, the location information server 310 can acquire information on the anchor authenticator in which a target MS is registered, depending on a Network Access Indicator (NAI) of the target MS. That is, the location information server 310 can acquire routing information for routing to the ASN GW including the anchor authenticator of the target MS. Upon acquiring the routing information for routing to the ASN GW including the anchor authenticator of the target MS, the location information server 310 can determine a location of the location information controller 222 that manages location information of the corresponding target MS. Accordingly, the location information server 310 transmits a Location Estimation Request message to the ASN GW 220 including the location information controller 222 that manages the location information of the corresponding target MS. The Location Estimation Request message is delivered to the location information controller 222, or Location Control Function (LCF), included in the ASN GW 220.

Upon receipt of the Location Estimation Request message from the location information server 310, the location information controller 222 directly transmits a location measurement request for the MS 100 to the base station 210. Further, the location information controller 222 collects and manages location-related information of the MS. Optionally, the location information controller 222 can calculate actual location information using the information related to the location of the MS.

The base station 210 can acquire location information of the MS by performing a location estimation procedure with the MS 100. To this end, a Location Measurement Function (LMF) having a function of actually measuring location information of the MS can be disposed in the base station 210 and the MS 100. The location measurement function is also known as a Location Agent (LA). In FIG. 1, the base station 210 includes a location measurement function 212, and the MS 100 includes a location measurement function 110.

The base station 210 can also ordinarily store the location information of the MS 100. To this end, the MS 100 can periodically transmit location information of the MS 100 to the base station 210. Therefore, the method by which the base station 210 acquires the location information of the MS can include all methods available to the skilled in the art.

After acquiring location information of the MS 100, the base station 210 transmits the location information of the MS 100 to the location information controller 222 of the ASN GW 220. Upon receipt of the location information of the MS 100, the location information controller 222 transmits a Location Estimation Response message including the location information to the location information server 310. The location information server 310 transmits the location information of the MS to an LBS client along with a Location Service Response message.

The MS 100 cannot perform the location estimation procedure with the base station 210 when the MS 100 is in an idle mode. This is because the MS 100 is not radio-connected to the network, i.e. the base station 210, when the MS 100 is in the idle mode.

Therefore, upon receipt of the Location Estimation Request message from the location information server 310, the location information controller 222 determines whether the MS whose location information is required is in an awake mode or an idle mode. If the MS 100 is in the awake mode, the location information controller 222 instructs the base station 210 to perform the location estimation procedure with the MS 100.

However, if the MS 100 is in the idle mode, the location information controller 222 acquires a location of an Anchor Paging Controller (A-PC; not shown) from the anchor authenticator of the corresponding MS, and transmits to the anchor paging controller an Initial_Paging_Request message for requesting paging of the corresponding MS. In this case, the location information controller 222 writes in the Initial_Paging_Request message the information indicating that the corresponding request is a paging request for location information acquisition rather than a paging request for message transmission. Upon receipt of the Initial_Paging_Request message, the anchor paging controller transmits an Initial_Paging_Response message to the location information controller 222.

When the MS 100 enters the awake mode, the MS 100 and the base station 210 perform the location estimation procedure with each other. Therefore, the location information controller 222 can acquire the location information of the MS 100.

The Location Estimation Response message includes an ID (requester ID) of the LBS client requesting the location information, and an ID (target ID) of the MS whose location information is requested. The location information server 310 forwards the location information of the MS to the LBS client using a Location Service Response message. Thereafter, the MS 100 re-enters the idle mode when the location estimation procedure is terminated.

In FIG 1, R1, R2, R3 and R6 indicate interfaces between the network elements, and for details, reference can be made to the WiMAX NWG Release 1.0 standard documents.

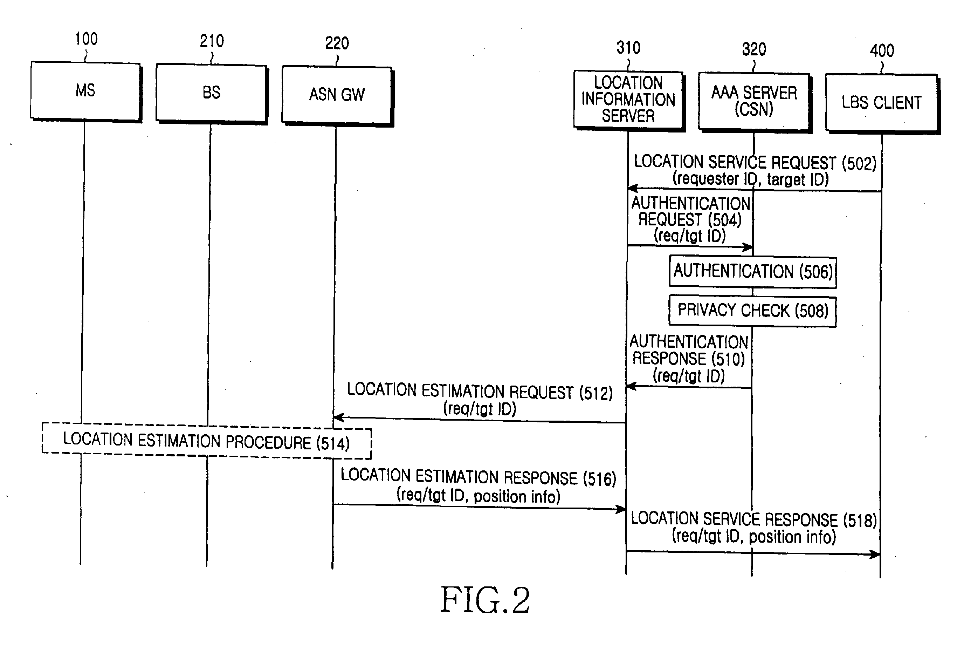

With reference to FIG. 2, a description will now be made of a method for providing a location information service for an MS in a connected mode in an LBS provisioning system according to the present invention.

FIG. 2 illustrates a method for providing a location information service for an MS in a connected mode in an LBS provisioning system according to the present invention.

Referring to FIG. 2, an LBS client 400 transmits in step 502 a Location Service Request message, or a message for requesting location information of a particular MS, to a location information server 310 to acquire location information of the MS. Herein, the LBS client 400 is a peer entity that requests location information of a particular MS, and the LBS client 400 can be either another MS or one entity disposed in the network. This message includes an ID (request ID) of the LBS client requesting the service, and an ID (Target ID) of the target MS.

Upon receipt of the service request, the location information server 310 transmits in step 504 to an AAA server 320 an Authentication Request message for requesting authentication of the service-requesting entity and privacy protection. The AAA server 320 performs in step 506 an authentication procedure for determining whether the LBS client 400 has an authority to request the corresponding service. Further, the AAA server 320 performs in step 508 a privacy check operation of determining whether the corresponding MS that should provide the location information of the MS will open location information of the MS to the public. The MS can avoid opening location information of the MS to the public, or may desire to open location information of the MS only to a particular target. This can be previously set in the location information server 310 by the user of the MS. The AAA server 320 transmits in step 510 an Authentication Response message including the authentication result to the location information server 310. Here, the AAA server 320 transmits the message to the location information server 310 along with path information to a corresponding location information controller 222 that manages location information of a target MS.

Upon receipt of the path information for the corresponding location information controller 222 from the AAA server 320, the location information server 310 transmits in step 512 a Location Estimation Request message to the location information controller 222 to request the location information controller 222 to extract location information of the MS and calculate a correct location through a location estimation procedure 514 with a base station 210 and the corresponding MS 100. The location information extraction and calculation process between the MS 100, the base station 210, and the location information controller 222 is irrelevant to the present invention, and for details, reference can be made to the location measurement method known in the art.

After collecting the location information of the MS through the process, the location information controller 222 transmits in step 516 a Location Estimation Response message to the location information server 310 to provide the location information of the MS. In step 518, the location information server 310 forwards the location information of the MS to the LBS client 400 requesting the service, using a Location Service Response message.

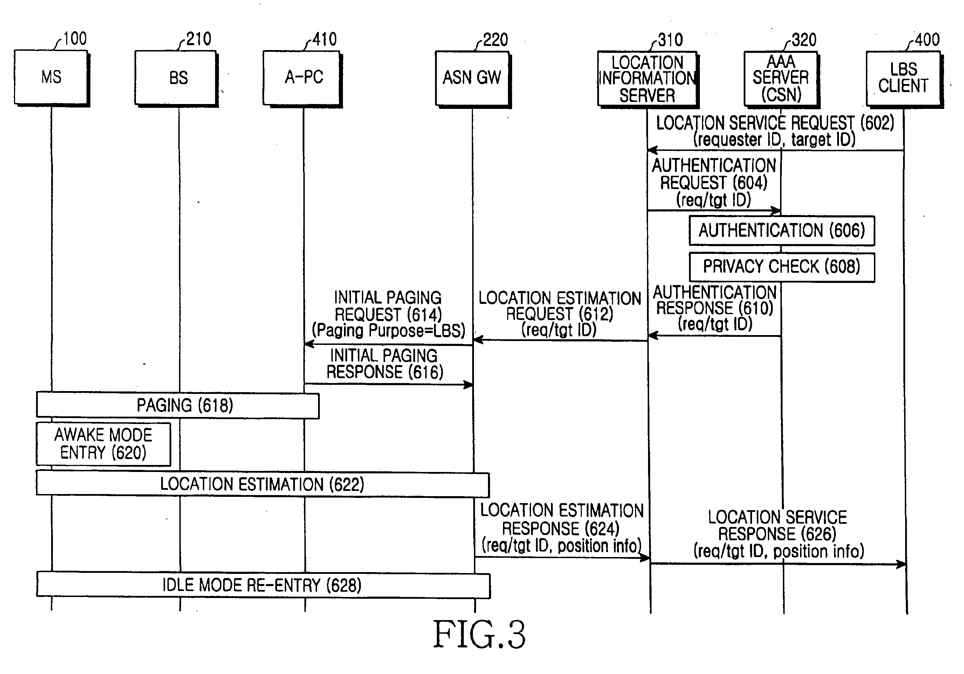

With reference to FIG 3, a description will now be made of a method for providing a location information service for an MS in an idle mode in an LBS provisioning system according to the present invention.

FIG 3 illustrates a method for providing a location information service for an MS in an idle mode in an LBS provisioning system according to the present invention.

Referring to FIG. 3, an LBS client 400 transmits in step 602 a Location Service Request message, or a message for requesting location information of a particular MS, to a location information server 310 to acquire location information of the MS. Herein, the LBS client 400 is a peer entity that requests location information of a particular MS, and the LBS client 400 can be either another MS or one entity disposed in the network. This message includes an ID (request ID) of the LBS client requesting the service, and an ID (Target ID) of the target MS.

Upon receipt of the service request, the location information server 310 transmits in step 604 to an AAA server 320 an Authentication Request message for requesting authentication of the service-requesting entity and privacy protection. The AAA server 320 performs in step 606 an authentication procedure for determining whether the LBS client 400 has an authority to request the corresponding service. Further, the AAA server 320 performs in step 608 a privacy check operation of determining whether the corresponding MS that should provide location information of the MS will open location information of the MS to the public. The MS can avoid opening location information of the MS to the public, or may desire to open location information of the MS only to a particular target. This can be previously set in the location information server 310 by the user of the MS. The AAA server 320 transmits in step 610 an Authentication Response message including the authentication result to the location information server 310. Here, the AAA server 320 transmits the message to the location information server 310 along with path information to a corresponding location information controller 222 that manages location information of a target MS.

Upon receipt of the path information for the corresponding location information controller 222 from the AAA server 320, the location information server 310 transmits in step 612 a Location Estimation Request message to the location information controller 222 to request the location information controller 222 to extract location information of the MS and calculate a correct location through a location estimation procedure (not shown) with a base station 210 and the corresponding MS 100. At this point, the location information controller 222 determines whether the MS 100 is in the idle mode. If the MS 100 is in the idle mode, the MS 100 cannot perform the location estimation procedure with the base station 210.

However, if the MS 100 is in the awake mode, the location information controller 222 instructs the base station 210 to perform the location estimation procedure with the MS 100.

However, if the MS 100 is in the idle mode, the location information controller 222 acquires a location of an Anchor Paging Controller (A-PC) 410 from the anchor authenticator of the corresponding MS. The location information controller 222 transmits in step 614 to the anchor paging controller 410 an Initial_Paging_Request message for requesting paging of the corresponding MS. Upon receipt of the Initial_Paging_Request message, the anchor paging controller 410 transmits in step 616 an Initial_Paging_Response message to the location information controller 222.

Thereafter, in step 618, the anchor paging controller 410, the base station 210 and the MS 100 perform paging for location information acquisition. As a result, when the MS 100 enters the awake mode in step 620, the MS 100 and the base station 210 perform the location estimation procedure with each other in step 622. The location information extraction and calculation process between the MS, the base station, and the location information controller 222 is irrelevant to the present invention, and for details, reference can be made to the location measurement method known in the art.

In this way, the location information controller 222 can acquire the location information of the MS 100 through the location estimation procedure. After acquiring the location information of the MS, the location information controller 222 transmits in step 624 a Location Estimation Response message to the location information server 310 to provide the location information of the MS. In step 626, the location information server 310 forwards the location information of the MS to the LBS client 400 requesting the service, using a Location Service Response message. When the location estimation procedure is terminated, the MS 100 has no need to hold the awake mode because the MS 100 has awoken for location measurement rather than awoken for data transmission/reception. Therefore, the location information controller 222 can make mode transition of the MS from the awake mode back to the idle mode by means of the anchor paging controller 410. Thus, the MS 100 re-enters the idle mode in step 628. In addition, the MS 100 can automatically transition to the idle mode when there is no transmission/reception data for a particular time.

As is apparent from the foregoing description, the present invention enables LBS provisioning in the mobile communication system employing the WiMAX Forum Network Working Group standard. Therefore, the present invention enables provisioning of various LBS-based services in the mobile communication system employing the WiMAX Forum Network Working Group standard, thereby giving the service providers an opportunity for the new profits, enabling the user to receive various LBS-based services, and thus contributing to popularization of the WiMAX service.

While the invention has been shown and described with reference to certain preferred embodiments thereof, it will be understood by those skilled in the art that various changes in form and details may be made therein without departing from the spirit and scope of the invention as defined by the appended claims.

## Claims

1. A system for providing Location Based Services (LBS) in a mobile communication system, the system comprising:
an Authentication, Authorization, and Accounting (AAA) server for managing information on an anchor authenticator of an Access Services Network GateWay (ASN GW) in which a mobile station is registered when entering the mobile communication system;
a Paging Controller (PC) for performing paging on the mobile station;
a location information server for, upon receipt of a location information service request message from an LBS client, receiving routing information for routing to an anchor authenticator of an associated mobile station from the AAA server, and transmitting a request for location information of the mobile station to the ASN GW including information on an anchor authenticator of the mobile station using the routing information; and
a location information controller for, upon receipt of the location information request from the location information server, determining whether the mobile station is in an idle mode, and when the mobile station is in the idle mode, instructing the PC to page the mobile station so a location estimation procedure is performed between the mobile station and a base station connected to the mobile station, and upon receipt of location information of the mobile station from the base station, transmitting the received location information to the location information server.

2. The system of claim 1, wherein the location information controller is disposed in the ASN GW.

3. The system of claim 1, wherein the location information server, by means of the AAA server, perform service authentication on the LBS client and performs a privacy check operation of determining whether the mobile station will not open location information of the mobile station to the public or will open location information of the mobile station only to a particular entity.

4. The system of claim 1, wherein the location information controller transmits an Initial_Paging_Request message to the PC to page the mobile station, wherein the Initial_Paging_Request message is a paging request for location information acquisition.

5. The system of claim 1, wherein after performing the location estimation procedure, the location information controller instructs the PC to make mode transition of the mobile station to an idle mode.

6. The system of claim 1, wherein the location information request includes an identifier (ID) of the LBS client, and an ID of the mobile station.

7. A system for providing Location Based Services (LBS) in a mobile communication system, the system comprising:
an Authentication, Authorization, and Accounting (AAA) server including information on an anchor authenticator of an Access Services Network Gate Way (ASN GW) in which a mobile station is registered when entering the mobile communication system;
a location information server for, upon receipt of a location information service request message from an LBS client, receiving routing information for routing to an anchor authenticator of the mobile station from the AAA server, and transmitting a request for location information of the mobile station to the ASN GW including the anchor authenticator of the mobile station using the routing information; and
a location information controller for, upon receipt of the location information request from the location information server, transmitting a request for location information of the mobile station to a base station to which the mobile station belongs, and upon receipt of location information of the mobile station from the base station, transmitting the received location information of the mobile station to the location information server.

8. The system of claim 7, wherein the location information controller is disposed in the ASN GW.

9. The system of claim 7, wherein the location information server, by means of the AAA server, perform service authentication on the LBS client and performs a privacy check operation of determining whether the mobile station will not open location information of the mobile station to the public or will open location information of the mobile station only to a particular entity.

10. The system of claim 7, wherein the base station acquires location information of the mobile station by performing a location estimation procedure with the mobile station.

11. The system of claim 7, wherein the base station stores the location information of the mobile station.

12. The system of claim 7, wherein the mobile station is a mobile station in a connected mode.

13. The system of claim 7, wherein the location information request includes an identifier (ID) of the LBS client, and an ID of the mobile station.

14. A method for providing Location Based Services (LBS) in a mobile communication system, the method the method comprising the steps of: receiving, by a location information server proving an LBS, a location information service request message from an LBS client;
receiving, by the location information server, routing information for routing to an anchor authenticator of an associated mobile station from an Authentication, Authorization, and Accounting (AAA) server;
transmitting a request for location information of the mobile station to an Access Services Network GateWay (ASN GW) including information on an anchor authenticator of the mobile station using the routing information;
receiving, by a location information controller included in the ASN GW, the location information request from the location information server, and determining whether the mobile station is in an idle mode;
controlling, by the location information controller, a Paging Controller (PC) to page the mobile station so a location estimation procedure is performed between the mobile station and a base station connected to the mobile station, when the mobile station is in the idle mode; and
receiving, by the location information controller, location information of the mobile station from the base station, and transmitting the received location information to the location information server.

15. The method of claim 14, further comprising:
performing, by the location information server, service authentication on the LBS client and performing a privacy check operation of determining whether the mobile station will not open location information of the mobile station to the public or will open location information of the mobile station only to a particular entity.

16. The method of claim 14, further comprising:
transmitting, by the location information controller, an Initial_Paging_Request message to the PC to page the mobile station, wherein the Initial_Paging_Request message is a paging request for location information acquisition.

17. The method of claim 14, further comprising:
instructing, by the location information controller, the PC to make mode transition of the mobile station to an idle mode transmitting after performing the location estimation procedure.

18. The method of claim 14, wherein the location information request includes an identifier (ID) of the LBS client, and an ID of the mobile station.

19. A method for providing Location Based Services (LBS) in a mobile communication system, the method the method comprising the steps of: receiving, by a location information server proving an LBS, a location information service request message from an LBS client;
receiving, by the location information server, routing information for routing to an anchor authenticator of an associated mobile station from an Authentication, Authorization, and Accounting (AAA) server;
transmitting a request for location information of the mobile station to an Access Services Network GateWay (ASN GW) including information on an anchor authenticator of the mobile station using the routing information;
receiving, by the location information controller included in the ASN GW, the location information request from the location information server, and transmitting a request for location information of the mobile station to a base station to which the mobile station belongs;
receiving, by the location information controller, location information of the mobile station from the base station, and transmitting the received location information of the mobile station to the location information server.

20. The method of claim 19, further comprising:
performing, by the location information server, service authentication on the LBS client and performing a privacy check operation of determining whether the mobile station will not open location information of the mobile station to the public or will open location information of the mobile station only to a particular entity.

21. The method of claim 19, further comprising:
acquiring, by the base station, location information of the mobile station by performing a location estimation procedure with the mobile station.

22. The method of claim 19, further comprising:
storing, by the base station, the location information of the mobile station.

23. The method of claim 19, wherein the mobile station is a mobile station in a connected mode.

24. The method of claim 19, wherein the location information request includes an identifier (ID) of the LBS client, and an ID of the mobile station.
